# FASCICULE DE BREVET EUROPEEN

(11) **EP 3 913 113 B1**
(45) Date de publication et mention de la délivrance du brevet: **19.06.2024**
(21) Numéro de dépôt: 21175105.2
(22) Date de dépôt: 20.05.2021
(51) Int. Cl.: C25B 1/04, C25B 9/23

(54) **INCINÉRATEUR POUR LA PRODUCTION D'HYDROGÈNE**
VERBRENNUNGSANLAGE ZUR WASSERSTOFFERZEUGUNG
INCINERATOR FOR HYDROGEN PRODUCTION

(30) Priorité: 20.05.2020 FR 2005258
(43) Date de publication de la demande: 24.11.2021
(73) Titulaire: Entrepose Group, 92700 Colombes (FR)
(72) Inventeur: THIBAUT, Romain, 78360 MONTESSON (FR); ROGEZ, Franck, 78100 SAINT GERMAIN EN LAYE (FR); SEUTIN, Hugues, 78150 LE CHESNAY (FR); MARCAZZAN, Mario, 78400 CHATOU (FR)
(74) Mandataire: Regimbeau

(56) Documents cités:
- WO-A1-2011/088515
- WO-A1-2015/198214
- CN-A- 105 862 062
- FR-A1- 2 930 770
- FR-A1- 3 056 230

## Description

### DOMAINE DE L'INVENTION

La présente invention concerne le domaine de la combustion et de la production d'énergie à partir de combustibles issus de déchets.

### ETAT DE LA TECHNIQUE

Les installations d'incinération permettent une combustion de déchets d'origine ménagère et/ou industrielle, et la valorisation de l'énergie produite par cette combustion.

De manière connue, un incinérateur comprend un four, dans lequel des combustibles, par exemple issus de déchets ménagers ou industriels, sont incinérés. Les fumées produites par l'incinération ou la combustion des combustibles sont acheminées jusqu'à une chaudière. Ces fumées sont une source de chaleur permettant de mettre en oeuvre un moteur à vapeur. Ainsi, de l'eau sous forme liquide est transformée en vapeur par la chaudière. La vapeur formée est acheminée vers une turbine qui permet d'entraîner un alternateur, produisant une énergie électrique. Il est ainsi possible de valoriser l'incinération des déchets en énergie électrique, qui peut être injectée dans un réseau électrique commun.

Toutefois, les besoins en énergie électrique du réseau électrique commun ne sont pas toujours concomitants à l'incinération des déchets. Il existe donc un besoin de stocker cette énergie électrique.

De plus, le coût de la production d'énergie d'un incinérateur est calculé en prenant en compte la revente de l'énergie électrique. Pour que le coût d'un incinérateur diminue, il est souhaitable de produire une énergie, ou un réservoir d'énergie plus rentable que l'énergie électrique directement introduite sur un réseau commun.

Le document FR-2 930 770 divulgue une installation comprenant un incinérateur et des électrolyseurs.

Les documents CN 105 862 062 et WO 2011/088515 divulguent des installations comprenant des centrales à charbon et des électrolyseurs.

### EXPOSE DE L'INVENTION

Un but de l'invention est de proposer une solution pour fabriquer un incinérateur qui permet de résoudre au moins en partie les problèmes posés par l'art antérieur.

Ce but est atteint dans le cadre de la présente invention grâce à un incinérateur selon la revendication 1.

L'incinérateur peut avantageusement comprendre les caractéristiques suivantes, prises individuellement ou en l'une quelconque de leurs combinaisons techniquement possibles :
- l'électrolyseur est un électrolyseur à oxyde solide du type SOEC « haute température » pour la production de dihydrogène, l'électrolyseur étant configuré pour produire du dihydrogène quand la pression de la vapeur d'eau à l'entrée de vapeur d'eau est comprise entre 1,1 bars et 15 bars, préférentiellement entre 1,1 bars et 10 bars,
- l'incinérateur comprend un échangeur thermique configuré pour réchauffer un fluide transporté dans le deuxième circuit fluidique,
- le deuxième circuit fluidique est relié à une partie du premier circuit de vapeur comprise entre au moins une sortie de vapeur d'eau de la turbine et le module de condensation de la vapeur d'eau inclus, et préférentiellement à au moins une sortie de vapeur d'eau de la turbine, l'incinérateur comprenant au moins un échangeur thermique configuré pour transférer de l'énergie thermique depuis un circuit fluidique relié à la sortie de dihydrogène vers le deuxième circuit fluidique,
- l'électrolyseur comprend une sortie de dioxygène, le deuxième circuit fluidique étant relié à une partie du premier circuit de vapeur comprise entre au moins une sortie de vapeur d'eau de la turbine et le module de condensation de la vapeur d'eau inclus, et préférentiellement à au moins une sortie de vapeur d'eau de la turbine, l'incinérateur comprenant au moins un échangeur thermique configuré pour transférer de l'énergie thermique depuis un circuit fluidique relié à la sortie de dioxygène vers le deuxième circuit fluidique,
- la chaudière comprend une sortie de vapeur d'eau, et le deuxième circuit fluidique est relié à une partie du premier circuit de vapeur comprise entre la sortie de vapeur d'eau de la chaudière et une entrée de vapeur d'eau de la turbine inclus,
- l'incinérateur comprend des moyens de contrôle de l'écoulement dans le premier circuit fluidique configurés pour contrôler un débit massique *Dₘ₁* en sortie de vapeur d'eau de la chaudière, et comprenant également des moyens de contrôle de l'écoulement dans le deuxième circuit fluidique configurés pour contrôler un débit massique *Dₘ₂,* le rapport entre le deuxième débit massique *Dₘ₂* et le premier débit massique *Dₘ₁* étant préférentiellement compris entre 0,1 % et 15 %, notamment entre 0,5 % et 10 %, et plus préférentiellement entre 3 % et 10 %,
- l'électrolyseur comprend une sortie de dioxygène reliée au four,
- l'incinérateur comprend un conduit reliant une sortie des fumées de la chaudière à une entrée de comburant du four,
- l'incinérateur comprend au moins un échangeur thermique configuré pour transférer de l'énergie thermique depuis une fumée en sortie du four vers le premier circuit fluidique, préférentiellement vers une partie du circuit fluidique différente du premier circuit de vapeur,
- l'incinérateur comprend un conduit d'acheminement de l'air relié à l'entrée de comburant du four, et comprenant au moins un réchauffeur configuré pour transférer l'énergie thermique du premier circuit fluidique vers de l'air compris dans le conduit d'acheminement de l'air,
- l'incinérateur comprend une conduite propre à transporter le dioxygène issu de l'électrolyseur et une conduite propre à transporter les fumées issues de la chaudière, et au moins un réchauffeur configuré pour transférer de l'énergie thermique depuis la conduite propre à transporter le dioxygène issu de l'électrolyseur, vers la conduite propre à transporter les fumées issues de la chaudière.
- l'incinérateur comprend une conduite propre à transporter les fumées issues de la chaudière, et au moins un réchauffeur configuré pour transférer de l'énergie thermique depuis la conduite propre à transporter les fumées issues de la chaudière vers une partie du premier circuit fluidique.
- l'incinérateur comprend un réchauffeur configuré pour permettre de transférer de l'énergie thermique depuis un conduit relié à la sortie en dihydrogène de l'électrolyseur 13 vers le premier circuit fluidique.

Un autre objet de l'invention est un procédé de production de dihydrogène, dans lequel on incinère des combustibles dans le four d'un incinérateur de l'invention, l'électrolyseur produisant du dihydrogène.

Avantageusement, le procédé comprend une étape de production du dihydrogène dans laquelle entre 80 % et 95% inclus, préférentiellement entre 85% et 90 % inclus de l'énergie électrique produite par l'alternateur est consommée par l'électrolyseur.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre schématiquement une partie d'un incinérateur selon un mode de réalisation de l'invention.
- La figure 2 illustre schématiquement l'agencement de différents circuits fluidiques d'un incinérateur selon un mode de réalisation de l'invention.
- La figure 3 illustre schématiquement le fonctionnement d'un électrolyseur selon un mode de réalisation de l'invention.
- La figure 4 illustre schématiquement l'agencement de différents circuits fluidiques d'un incinérateur selon un mode de réalisation de l'invention.
- La figure 5 illustre schématiquement des échangeurs thermiques agencés en sortie de l'électrolyseur selon un mode de réalisation de l'invention.

Sur l'ensemble des figures, les éléments similaires portent des références identiques.

### DEFINITIONS

On entend par « dispositif formant électrolyse réversible à haute température » un dispositif adapté pour l'électrolyse réversible de l'eau à une température comprise entre 700 °C et 900 °C, préférentiellement à 800°C.

### DESCRIPTION DETAILLEE DE L'INVENTION

### Architecture globale de l'incinérateur 1

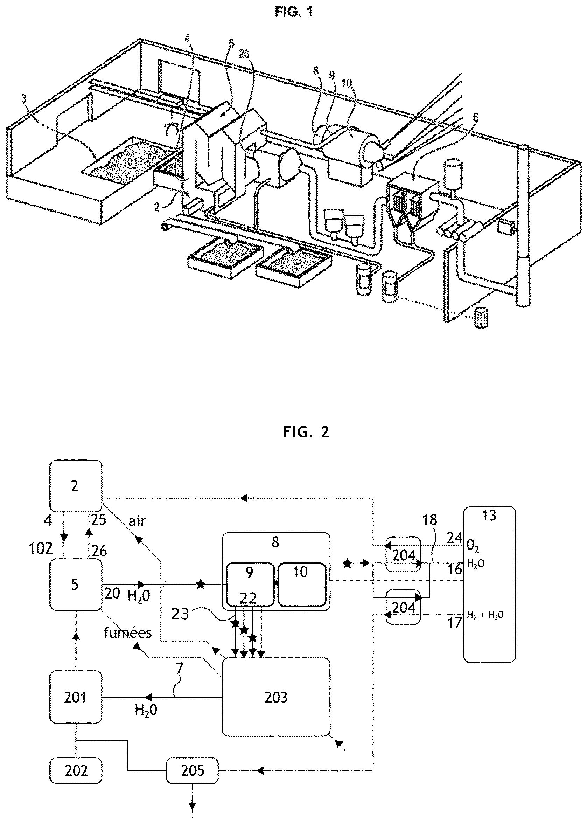

En référence à la figure 1, un incinérateur 1 comprend un module de chargement 101 de combustible 3 configuré pour recevoir le combustible 3, préférentiellement solide, tel que des déchets ménagers et/ou industriels. Le module de chargement 101 est configuré pour introduire les combustibles 3 dans une enceinte d'un four 2.

L'incinérateur 1 comprend un four 2 configuré pour incinérer des combustibles 3. Le four 2 comprend une entrée de combustible reliée à la sortie de combustible du module de chargement 101. Il comprend également une sortie de fumées 4, produites par l'incinération des combustibles 3. Le four 2 peut être choisi parmi un four à grille, un four à lit fluidisé, et un four tournant. Le four 2 comprend également une entrée de comburant 25, qui permet d'introduire de l'air ou du dioxygène pour assurer la combustion des combustibles 3 dans le four 2.

L'incinérateur 1 comprend préférentiellement un module de post-combustion 102. Le module de post combustion 102 est préférentiellement relié à la sortie de fumées du four 2. Le module de post-combustion 102 permet d'assurer une combustion complète des combustibles et des produits de combustibles à la sortie du four 2, tout en permettant à une partie des cendres issues de la combustion dans le four 2 de sédimenter, de sorte à être ultérieurement collectées.

L'incinérateur 1 comprend préférentiellement un séparateur de cendres, adapté pour la séparation des cendres à hautes températures, préférentiellement à une température supérieure ou égale à 900 °C. L'entrée du séparateur de cendres est reliée à la sortie du four 2 ou à la sortie module de post-combustion 102. La sortie du séparateur de cendres est reliée à une chaudière 5. Le séparateur de cendres est préférentiellement de type cyclonique. En effet, le séparateur de cendres peut être configuré pour que l'écoulement le traversant forme un cyclone à l'intérieur du séparateur, ce qui permet de recueillir des particules aéroportées dans l'écoulement gazeux, en exploitant leur inertie.

L'incinérateur 1 comprend une chaudière 5. La chaudière 5 comprend une entrée de fumées 103 reliée à la sortie de fumées 4 du four 2 (directement ou indirectement, par exemple par la sortie de fumées 4, ou du module de post combustion 102, ou du séparateur de cendres), et une sortie de fumées 26. Préférentiellement, la chaudière 5 est une chaudière 5 à tubes de fumées. Par « chaudière à tubes de fumées », on entend qu'un circuit fluidique comprenant de l'eau sous forme liquide ou gazeuse entoure des tubes adaptés au passage des fumées issues de la combustion dans le four 2. Dans une variante, la chaudière 5 peut être une chaudière 5 à tubes d'eau. Ainsi, il est possible de transduire la chaleur des fumées issues de la combustion vers l'eau passant par la chaudière 5.

L'incinérateur 1 comprend un module de traitement des fumées 6 relié à la sortie de fumée 26 de la chaudière 5. Le module de traitement des fumées peut par exemple comprendre un module de traitement des oxydes d'azotes dans les fumées par réduction.

En référence à la figure 2, l'incinérateur 1 comprend également un premier circuit fluidique 7. Le premier circuit fluidique 7 forme une boucle et traverse la chaudière 5. Ainsi, le premier circuit fluidique 7 est configuré pour comprendre de l'eau qui peut circuler en phase gazeuse et en phase liquide en boucle pour actionner une turbomachine vapeur.

L'incinérateur 1 comprend également un turboalternateur 8. Le turboalternateur 8 comprend une turbine 9 et un alternateur 10. Le premier circuit fluidique 7 comprend une partie reliant la sortie de vapeur d'eau de la chaudière 20 à l'entrée de vapeur d'eau de la turbine, de sorte que la turbine est agencée dans le premier circuit fluidique 7.

La turbine 9 comprend au moins une sortie de vapeur d'eau 22. Préférentiellement, la turbine 9 comprend plusieurs sorties de vapeur d'eau 22. En particulier, la turbine 9 peut comprendre plusieurs étages de détente de la vapeur d'eau, chaque étage comprenant une sortie de vapeur d'eau 22.

L'incinérateur 1 comprend un module de condensation 203 de la vapeur d'eau, relié fluidiquement à au moins une sortie de vapeur d'eau 22 de la turbine 9. Le module de condensation 203 est configuré pour transformer la vapeur d'eau qui s'écoule en sortie du turboalternateur 8 en eau liquide.

Une partie du premier circuit fluidique 7 comprise entre la chaudière 5 et le module de condensation 203 et comprenant la turbine 9 forme un premier circuit de vapeur 23. Le premier circuit de vapeur 23 correspond à la partie du premier circuit fluidique 7 configurée pour transporter l'écoulement d'eau sous forme gazeuse.

L'incinérateur 1 comprend une bâche alimentaire 201. Le module de condensation 203 est relié fluidiquement à la bâche alimentaire 201. La bâche alimentaire 201 permet de stocker l'énergie provenant des condensats d'eau recyclés et des dispositifs de récupération de chaleur du module de condensation 203. La bâche alimentaire 201 permet également de fournir une réserve d'eau pour stabiliser le débit en eau alimentant la chaudière 5. La bâche alimentaire 201 est reliée fluidiquement à la chaudière 5. Ainsi, le premier circuit fluidique 7 forme une boucle traversant la chaudière 5.

L'incinérateur 1 comprend un électrolyseur 13 d'eau. L'électrolyseur 13 est configuré pour produire du dihydrogène. L'électrolyseur 13 est relié électriquement à l'alternateur 10. L'électrolyseur 13 comprend une entrée de vapeur d'eau 16, une sortie de dihydrogène 17, une entrée de gaz balayant, et une sortie de dioxygène 24. L'électrolyseur 13 est configuré pour, lors de l'injection d'eau sous forme gazeuse par l'entrée de vapeur d'eau 16, et d'un gaz balayant dans l'entrée de gaz balayant, produire du dihydrogène et du dioxygène.

L'incinérateur comprend également un deuxième circuit fluidique 18. Le deuxième circuit fluidique 18 est agencé de manière à relier fluidiquement l'entrée en vapeur d'eau 16 de l'électrolyseur 13 au premier circuit de vapeur 23.

De par la configuration des différents éléments de l'incinérateur 1, il est ainsi possible d'alimenter à la fois en énergie électrique et en vapeur d'eau l'électrolyseur 13 de manière à produire du dihydrogène. L'électrolyseur 13 est alors autonome énergiquement. Ainsi, il est possible de stocker l'énergie issue de la combustion de combustible 3 en produisant du dihydrogène avec l'incinérateur 1 objet de l'invention. Dans un mode de réalisation de l'invention, on peut contrôler l'écoulement de la vapeur d'eau dans le deuxième circuit fluidique à un débit massique d'eau compris entre 500 kg/h et 10000 kg/h, et préférentiellement à un débit massique compris entre 2500 kg/h et 4000 kg/h.

### Electrolyseur 13

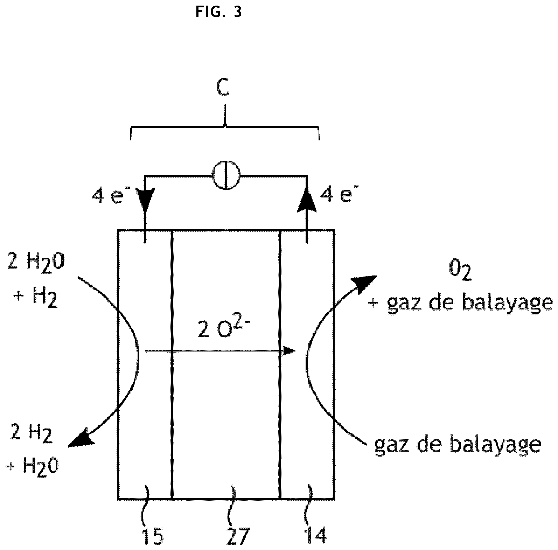

En référence à la figure 3, l'électrolyseur 13 est préférentiellement un électrolyseur 13 à oxyde solide du type SOEC (SOEC pour *Solide Oxide Electrolyser Cells* en anglais) à haute température pour la production de dihydrogène. L'électrolyseur 13 est préférentiellement configuré pour produire du dihydrogène quand la pression de la vapeur d'eau à l'entrée de vapeur d'eau est comprise entre 1,1 bars et 15 bars, préférentiellement entre 1,1 bars et 10 bars. Un tel électrolyseur comprend un empilement de motifs élémentaires, chaque motif élémentaire comprenant une cellule d'électrolyse à oxyde solide.

Une cellule C d'électrolyse à oxyde solide comprend une anode 14, un électrolyte solide 27, et une cathode 15 superposés, et compris entre des plaques d'interconnexion en alliage métallique, aussi appelées plaques bipolaires ou interconnecteurs. Plus précisément, les interconnecteurs ont pour fonction d'assurer à la fois le passage du courant électrique et la circulation des gaz au voisinage de chaque cellule (tels que de la vapeur d'eau, du dihydrogène, du dioxygène), et de séparer les compartiments anodiques et cathodiques.

En référence à la figure 3, un dispositif formant électrolyseur réversible peut être configuré pour fonctionner selon un mode d'électrolyseur pour la production d'hydrogène. L'électrolyse de la vapeur d'eau à haute température peut être mise en oeuvre en injectant de la vapeur d'eau dans la cathode 2. Sous l'effet d'un courant électrique appliqué à la cellule, les molécules d'eau sont dissociées à l'interface formée par la cathode 2 et l'électrolyte 3. Cette dissociation produit du dihydrogène (H₂) et des ions oxygène (O²⁻). Le dihydrogène est collecté et évacué en sortie de la cellule. Les ions oxygène O²⁻ migrent au travers de l'électrolyte, et préférentiellement au travers de l'électrolyte solide 27 dans le cas d'un électrolyseur de type SOEC, et sont recombinés en dioxygène à l'interface entre l'électrolyte 27 et l'anode 14. Un gaz de balayage, préférentiellement de l'air, peut circuler au niveau de l'anode 14, et ainsi collecter l'oxygène généré sous forme gazeuse à l'anode 14.

De par la connexion entre l'entrée de vapeur d'eau 16 de l'électrolyseur haute température et le premier circuit de vapeur 23, il est possible de fournir directement à l'électrolyseur 13 de la vapeur d'eau à une température plus élevée que la température ambiante, préférentiellement à haute température, et ainsi éviter de consommer de l'énergie pour chauffer la vapeur d'eau en entrée de l'électrolyseur 13. Il est ainsi possible d'augmenter le rendement global de l'incinérateur 1.

### Rendement de l'incinérateur 1

En référence à la figure 2, l'incinérateur 1 peut comprendre au moins un échangeur thermique 204 configuré pour transférer de l'énergie thermique vers le deuxième circuit fluidique 18. L'énergie thermique peut provenir d'une source de chaleur externe à l'incinérateur, comprise dans l'incinérateur, et/ou produite par l'énergie électrique de l'alternateur 10.

L'échanger thermique peut être préférentiellement configuré pour transférer de l'énergie thermique vers le deuxième circuit fluidique 18 depuis un circuit fluidique relié à la sortie de dihydrogène 17. En variante ou en combinaison, l'incinérateur 1 peut comprendre au moins un échangeur thermique 204 configuré pour transférer de l'énergie thermique depuis un circuit fluidique relié à la sortie de dioxygène 24 vers le deuxième circuit fluidique 18. L'incinérateur 1 comprend préférentiellement au moins deux échangeur thermiques 204, l'un configuré pour transférer de l'énergie thermique depuis un circuit fluidique relié à la sortie de dihydrogène 17 vers le deuxième circuit fluidique 18 et l'autre configuré pour transférer de l'énergie thermique depuis un circuit fluidique relié à la sortie de dioxygène 24 vers le deuxième circuit fluidique 18.

En variante ou en combinaison, il est possible de surchauffer la vapeur issue de la chaudière 5 en utilisant une source de chaleur externe à l'incinérateur 1, comme un bruleur à gaz. Dans cette configuration, l'incinérateur 1 peut comprendre au moins un échangeur thermique configuré pour transférer l'énergie du dihydrogène et/ou du dioxygène en sortie de l'électrolyseur 13 vers le premier circuit fluidique 7. Le rendement global de l'incinérateur 1 peut être augmenté de cette manière.

L'incinérateur 1 peut également comprendre un échangeur thermique permettant de transférer de l'énergie thermique apportée en surplus de l'énergie transférée au deuxième circuit fluidique 18 par la source de chaleur externe vers le premier circuit fluidique 7. Ainsi, il est possible de transférer l'énergie thermique qui n'a pas été transférée au deuxième circuit fluidique 18 au premier circuit fluidique 7.

Préférentiellement, le deuxième circuit fluidique 18 est configuré pour acheminer de la vapeur d'eau à une température comprise entre 150°C et 300°C en amont des échangeurs thermiques 204 par rapport à l'électrolyseur 13.

Préférentiellement, les échangeurs thermiques 204 sont configurés pour réchauffer l'eau à une température comprise entre 700°C et 850°C à l'entrée de l'électrolyseur 13, et préférentiellement à une température comprise entre 730°C et 800°C à l'entrée de l'électrolyseur.

L'électrolyseur est préférentiellement configuré pour émettre du dihydrogène et/ou du dioxygène à une température comprise entre 750°C et 850°C.

Le dioxygène produit en sortie de l'électrolyseur 13, et/ou le dihydrogène produit en sortie de l'électrolyseur 13 présentent une température supérieure à la température d'entrée en vapeur d'eau lors du fonctionnement de l'électrolyseur 13.

Ainsi, il est possible d'augmenter la température de la vapeur d'eau issue du premier circuit de vapeur 23 de sorte à l'ajuster à la température de fonctionnement de l'électrolyseur 13.

Dans le cas d'un électrolyseur 13 à oxyde solide, qui nécessite une vapeur d'eau présentant une température supérieure à 600°, ce mode de réalisation est particulièrement avantageux.

Le deuxième circuit fluidique 18 est préférentiellement relié à une partie du premier circuit de vapeur 23 comprise entre au moins une sortie de vapeur d'eau de la turbine 22 et le module de condensation 203 de la vapeur d'eau inclus, et préférentiellement à au moins une sortie de vapeur d'eau de la turbine 22.

En combinaison avec un ou plusieurs échangeurs thermiques 204, cette configuration permet, d'une part, d'éviter de soutirer de la vapeur d'eau en amont de la turbine 9, ce qui permet d'augmenter le rendement de l'incinérateur 1, et de réchauffer la vapeur issue des sorties de vapeur d'eau de la turbine 22 à une température de fonctionnement de l'électrolyseur 13 sans avoir à réchauffer cette vapeur avec une source externe de chaleur. Il est ainsi possible d'augmenter le rendement global de l'incinérateur 1.

En variante ou en combinaison, le deuxième circuit fluidique 18 est relié à une partie du premier circuit de vapeur 23 comprise entre la sortie de vapeur d'eau de la chaudière 20 et une entrée de vapeur d'eau de la turbine 9 inclus. Ainsi, il est possible de soutirer de la vapeur d'eau au premier circuit fluidique 7 à une température jusqu'à 500 °C. Ainsi, plus la température de la vapeur d'eau dans le deuxième circuit fluidique est élevée, plus il est possible de diminuer la taille du ou des échangeurs thermique 204. Le deuxième circuit fluidique 18 peut être relié à la fois en amont et en aval de la turbine 9, de manière à permettre l'ajustement de la température en entrée de l'électrolyseur 13, tout en conservant une puissance transmise à l'alternateur élevée suffisante.

L'incinérateur 1 comprend des moyens de contrôle de l'écoulement, en particulier du débit de l'écoulement, dans l'ensemble des circuits fluidique. Les moyens de contrôle de l'écoulement peuvent comprendre une ou plusieurs pompes dans les circuits fluidiques dans lesquels l'eau est dans une phase liquide. Les moyens de contrôle de l'écoulement peuvent également comprendre des vannes, à la fois dans les circuits fluidiques dans lesquels l'eau est dans une phase liquide et/ou gazeuse. Comme précité, l'incinérateur 1 peut également comprendre des éjecteurs, configurés pour faire diminuer la pression dans une partie d'un circuit fluidique. L'incinérateur 1 peut comprendre au moins un éjecteur, relié entre la turbine 9 et l'aérocondenseur 303, permettant ainsi d'entraîner l'écoulement de vapeur depuis la turbine 9 vers l'aérocondenseur 303.

L'incinérateur 1 peut préférentiellement comprendre des moyens de contrôle de l'écoulement dans le premier circuit fluidique 7 configurés pour contrôler un débit massique *Dₘ₁* en sortie de vapeur d'eau 20 de la chaudière, et comprendre également des moyens de contrôle de l'écoulement dans le deuxième circuit fluidique 18 configurés pour contrôler un débit massique *Dₘ₂* du deuxième circuit fluidique 18, préférentiellement mesuré à l'entrée en vapeur de l'électrolyseur 13. Les moyens de contrôle de l'écoulement précités sont préférentiellement configurés pour que le rapport entre le deuxième débit massique *Dₘ₂* et le premier débit massique *Dₘ₁* soit compris entre 0,1 % et 15 %, notamment entre 0,5 % et 10 %, et plus préférentiellement entre 3 % et 10 %. En effet, les inventeurs ont découvert que l'augmentation du rendement global de l'incinérateur 1 est lié au rapport du débit massique *Dₘ₂* sur le débit massique *Dₘ₁*. Les inventeurs ont notamment découvert que, pour des valeurs de ce rapport inférieures aux gammes précitées, le rendement global de l'incinérateur diminue car l'alternateur 10 produit trop d'énergie électrique au regard de la vapeur d'eau acheminée à l'électrolyseur par le deuxième circuit fluidique 18 et l'électrolyseur ne consomme pas toute l'énergie produite par l'alternateur 10. À l'opposé, pour des valeurs de ce rapport supérieures aux gammes précitées, l'alternateur 10 ne produit pas assez d'électricité au regard de la vapeur d'eau acheminée à l'électrolyseur 13. De plus, pour des valeurs de ce rapport plus élevées que dans les gammes précitées, il existe un risque de décrochement du rendement de la turbine 9. L'incinérateur 1 comprend préférentiellement une unité de commande (non représentée), configurée pour contrôler, préférentiellement par les moyens de d'écoulement des différents circuits fluidiques, tels que des pompes, des sources de vide, des vannes ou le dimensionnement des différents canaux fluidiques, une production électrique de l'électrolyseur 13 comprise entre 80 % et 95 %, préférentiellement entre 85% et 90%, de l'énergie électrique produite par l'alternateur 10.

En référence à la figure 2, l'incinérateur 1 comprend un séparateur 205 de vapeur d'eau et de dihydrogène. La sortie de dihydrogène 17 de l'électrolyseur 13 est reliée fluidiquement au séparateur 205. Le séparateur 205 comprend une sortie d'eau reliée au premier circuit fluidique 7. Préférentiellement, la sortie du séparateur 205 est fluidiquement reliée à la bâche alimentaire 201. Ainsi, il est possible de réutiliser l'eau qui n'a pas été consommée par électrolyseur 13 pour produire du dihydrogène, et la réinjecter dans le premier circuit fluidique 7. Cette configuration permet d'augmenter le rendement global de l'incinérateur 1.

La sortie de dioxygène 24 peut être préférentiellement reliée à l'entrée de comburant du four 25. Ainsi, il est possible d'utiliser le dioxygène produit par électrolyseur 13 pour la combustion des combustibles 3, en particulier des déchets industriels et/ou ménagers. Cette configuration permet d'augmenter le rendement de l'incinérateur 1. Cette configuration permet également de contrôler avec précision la température de combustion dans le four 2.

L'incinérateur 1 peut préférentiellement comprendre un conduit reliant une sortie des fumées de la chaudière 26 à une entrée de comburant 25 du four 2. En effet, quand du dioxygène, provenant de l'électrolyseur 13, est introduit dans le four 2, l'apport d'air extérieur pour la combustion n'est pas ou est nécessaire en moins grande quantité. Il est ainsi possible de réutiliser les fumées émises en sortie de la chaudière 5, et ainsi d'éviter de réchauffer de l'air provenant de l'extérieur de l'incinérateur 1. Cette configuration permet d'augmenter leur rendement global de l'incinérateur 1.

L'incinérateur 1 peut préférentiellement comprendre un dégazeur 302 agencé dans le premier circuit fluidique 7. Le dégazeur 302 permet d'éliminer l'oxygène ou d'autres gaz dissous dans l'eau en phase liquide du premier circuit fluidique 7. Le dégazeur 302 peut être directement reliée à la bâche alimentaire 201.

L'incinérateur 1 peut comprendre un appoint d'eau 202 relié au premier circuit fluidique 7 entre la turbine 9 et la bâche alimentaire 201.

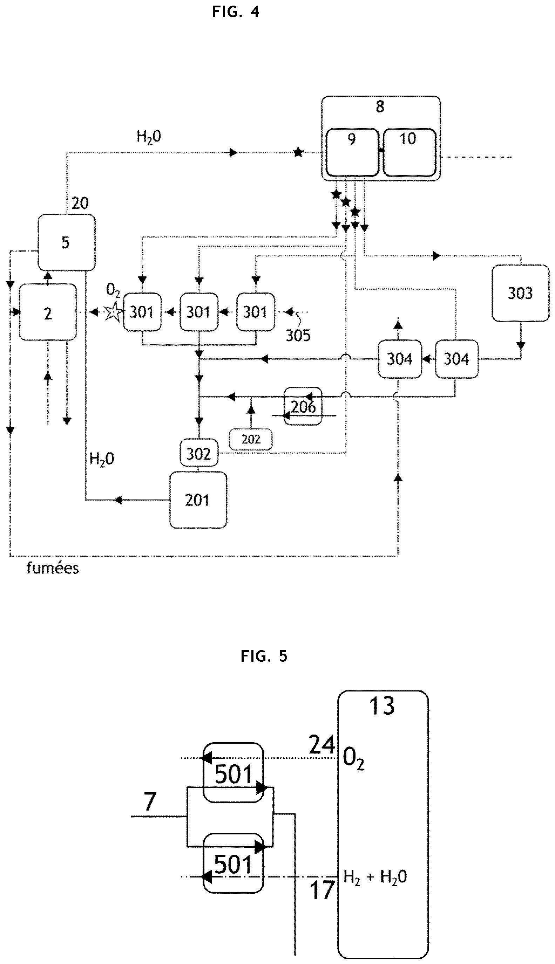

En référence à la figure 4, l'incinérateur 1 peut préférentiellement comprendre au moins un échangeur thermique 304 configuré pour transférer de l'énergie thermique depuis une fumée en sortie du four 2 vers le premier circuit fluidique 7. Préférentiellement, le ou les échangeurs thermiques sont agencés pour permettre de transférer de l'énergie thermique vers une partie du circuit fluidique différente du premier circuit de vapeur 23, c'est-à-dire une partie du premier circuit fluidique 7 configurée pour transporter de l'eau en phase liquide.

Le premier circuit fluidique 7 peut comprendre un aérocondenseur 303. L'aérocondenseur 303 est un échangeur thermique à contact indirect, configuré pour refroidir et condenser de la vapeur avec de l'air.

L'aérocondenseur 303 est agencé dans le premier circuit fluidique 7 entre le premier circuit de vapeur 23 et une partie du premier circuit fluidique configuré pour transporter de l'eau en phase liquide. Préférentiellement, le ou les échangeurs thermiques 304 sont agencés entre l'aérocondenseur 303 et la bâche alimentaire 201. Ainsi, il est possible de réchauffer l'eau en sortie de l'aérocondenseur.

L'incinérateur 1 comprend un conduit d'acheminement de l'air 305 extérieur, relié à l'entrée en comburant 25 du four 2. La sortie de dioxygène 24 de l'électrolyseur peut préférentiellement être reliée au conduit d'acheminement de l'air 305, et permet ainsi de réintroduire le dioxygène produit dans le four 2.

L'incinérateur 1 peut préférentiellement comprendre au moins un réchauffeur 301 configuré pour transférer l'énergie thermique du premier circuit fluidique 7 vers de l'air compris dans le conduit d'acheminement de l'air 305. Ainsi, il est possible d'utiliser l'énergie produite par la condensation de la vapeur d'eau en sortie de la turbine 9 pour réchauffer l'air extérieur introduit dans le four 2 pour la combustion des combustibles 3. Il en résulte une augmentation du rendement global de l'incinérateur 1. En référence à la figure 4, il est possible d'agencer une pluralité de réchauffeurs 301 en série, par exemple trois réchauffeurs en série.

En référence à la figure 4, l'incinérateur 1 peut préférentiellement comprendre un réchauffeur 206 (échangeur thermique) configuré pour permettre de transférer de l'énergie thermique depuis un conduit relié à la sortie en dihydrogène 17 de l'électrolyseur 13 vers le premier circuit fluidique. Ainsi, il est possible de réchauffer l'eau en phase liquide avant son introduction dans la bâche alimentaire 201.

L'incinérateur 1 peut également comprendre un module de détente isenthalpique, non représenté, agencé, entre la jonction entre le premier circuit fluidique 7 et le deuxième circuit fluidique 18, et l'entrée de vapeur d'eau 16 de l'électrolyseur. Ainsi, il est possible de récupérer l'énergie de la détente isenthalpique de la vapeur d'eau, tout en ajustant la pression d'entrée à l'électrolyseur 13 sensiblement égale à la pression de sortie de l'électrolyseur, pour éviter d'endommager l'électrolyseur 13. Cela a pour effet d'augmenter le rendement global de l'incinérateur 1.

Le premier circuit fluidique peut être préférentiellement dimensionné de sorte que la différence de pression entre l'entrée de vapeur d'eau 16 de l'électrolyseur 13 et entre la sortie de dihydrogène 17 soit comprise entre 0,1 bar et 2 bars, et préférentiellement comprise entre 0,2 bars et 1 bars.

Un autre aspect de l'invention porte sur un procédé de production de l'hydrogène, préférentiellement du dihydrogène, dans lequel on incinère des combustibles 3 dans le four 2 d'un incinérateur 1 selon l'invention. Un tel procédé comprend une étape de production du dihydrogène, produit par l'électrolyseur 13, alimenté en énergie électrique par le turboalternateur 8 et en vapeur d'eau par le premier circuit fluidique 7.

Le procédé comprend préférentiellement une étape dans laquelle entre 80 % et 85% inclus, préférentiellement entre 85% et 90 % inclus de l'énergie électrique produite par l'alternateur est consommée par l'électrolyseur. Ainsi, il est possible de produire de l'énergie qui peut être stockée sous la forme de dihydrogène, de sorte à éviter de synchroniser la production énergétique de l'incinérateur 1 avec les besoins électriques du réseau commun.

En référence à la figure 4, l'incinérateur 1 peut comprendre au moins un réchauffeur 207 (échangeur thermique) configuré pour transférer de l'énergie thermique depuis une conduite propre à transporter le dioxygène issu de l'électrolyseur 13, vers une conduite propre à transporter les fumées issues de la chaudière 5.

En référence à la figure 5, l'incinérateur 1 peut préférentiellement comprendre un échangeur thermique 501 configuré pour transférer de l'énergie thermique depuis une conduite reliée à la sortie de dioxygène 24 de l'électrolyseur 13 vers le premier circuit fluidique 7. L'incinérateur 1 peut également comprendre un échangeur thermique 501 configuré pour transférer de l'énergie thermique depuis une conduite reliée à la sortie de dihydrogène 17 de l'électrolyseur 13 vers le premier circuit fluidique 7. Ainsi, il est possible d'utiliser l'énergie produite indirectement par un apport à l'incinérateur d'une source externe d'énergie thermique en entrée de l'électrolyseur 13, comme de l'énergie électrique et où de l'énergie thermique apportée à la vapeur d'eau en entrée de l'électrolyseur 13, de manière à augmenter le rendement global de l'incinérateur.

## Revendications

1. Incinérateur (1), comprenant :
- un four (2) configuré pour incinérer des combustibles (3), le four (2) comprenant une sortie de fumées (4) produites par l'incinération des combustibles (3),
- une chaudière (5) comprenant une entrée de fumées reliée à la sortie de fumées du four (2), et comprenant une sortie de fumées,
- un premier circuit fluidique (7) formant une boucle, le premier circuit fluidique (7) traversant la chaudière (5),
- un turboalternateur (8), comprenant une turbine (9) et un alternateur (10), la turbine (9) étant agencée dans le premier circuit fluidique (7) et comprenant au moins une sortie de vapeur d'eau,
- un module de condensation (203) de la vapeur d'eau, relié fluidiquement à au moins une sortie de vapeur d'eau (22) de la turbine (9), une partie du premier circuit fluidique (7) comprise entre la chaudière (5) et le module de condensation (203) et comprenant la turbine (9) formant un premier circuit de vapeur (23),
- un électrolyseur (13) d'eau, l'électrolyseur (13) étant configuré pour la production de dihydrogène, l'électrolyseur (13) étant relié électriquement à l'alternateur (10), et comprenant une entrée de vapeur d'eau (16), et une sortie de dihydrogène(17),
- un deuxième circuit fluidique (18), le deuxième circuit fluidique (18) étant relié au premier circuit de vapeur (23) et à l'entrée de vapeur d'eau (16) de l'électrolyseur (13), et
- un séparateur (205) de vapeur et de dihydrogène, dans lequel la sortie de dihydrogène (17) est reliée au séparateur (205), le séparateur comprenant une sortie d'eau reliée au premier circuit fluidique (7).

2. Incinérateur (1) selon la revendication 1, dans lequel l'électrolyseur (13) est un électrolyseur (13) à oxyde solide du type SOEC pour la production de dihydrogène, l'électrolyseur (13) étant configuré pour produire du dihydrogène quand la pression de la vapeur d'eau à l'entrée de vapeur d'eau est comprise entre 1,1 bars et 15 bars, préférentiellement entre 1,1 bars et 10 bars.

3. Incinérateur (1) selon la revendication 1 ou 2, comprenant un échangeur thermique (204) configuré pour réchauffer un fluide transporté dans le deuxième circuit fluidique (18).

4. Incinérateur (1) selon l'une des revendications 1 à 3, dans lequel :
- le deuxième circuit fluidique (18) est relié à une partie du premier circuit de vapeur (23) comprise entre au moins une sortie de vapeur d'eau de la turbine (22) et le module de condensation (203) de la vapeur d'eau inclus, et préférentiellement à au moins une sortie de vapeur d'eau de la turbine (22), l'incinérateur (1) comprenant au moins un échangeur thermique (204) configuré pour transférer de l'énergie thermique depuis un circuit fluidique relié à la sortie de dihydrogène (17) vers le deuxième circuit fluidique (18).

5. Incinérateur (1) selon l'une des revendications 1 à 4, dans lequel l'électrolyseur comprend une sortie de dioxygène (24),
le deuxième circuit fluidique (18) étant relié à une partie du premier circuit de vapeur (23) comprise entre au moins une sortie de vapeur d'eau de la turbine (22) et le module de condensation (203) de la vapeur d'eau inclus, et préférentiellement à au moins une sortie de vapeur d'eau de la turbine (22), l'incinérateur (1) comprenant au moins un échangeur thermique (204) configuré pour transférer de l'énergie thermique depuis un circuit fluidique relié à la sortie de dioxygène (24) vers le deuxième circuit fluidique (18).

6. Incinérateur (1) selon l'une des revendications 1 à 5, dans lequel la chaudière (5) comprend une sortie de vapeur d'eau (20), et dans lequel le deuxième circuit fluidique (18) est relié à une partie du premier circuit de vapeur (23) comprise entre la sortie de vapeur d'eau de la chaudière (20) et une entrée de vapeur d'eau de la turbine (9) inclus.

7. Incinérateur (1) selon l'une des revendications 1 à 6, comprenant des moyens de contrôle de l'écoulement dans le premier circuit fluidique (7) configurés pour contrôler un débit massique *Dₘ₁* en sortie de vapeur d'eau de la chaudière, et comprenant également des moyens de contrôle de l'écoulement dans le deuxième circuit fluidique (18) configurés pour contrôler un débit massique le rapport entre le deuxième débit massique *Dₘ₂* et le premier débit massique *Dₘ₁* étant préférentiellement compris entre 0,1 % et 15 %, notamment entre 0,5 % et 10 %, et plus préférentiellement entre 3 % et 10 %.

8. Incinérateur (1) selon l'une des revendications 1 à 7, dans lequel l'électrolyseur comprend une sortie de dioxygène (24) reliée au four (2).

9. Incinérateur (1) selon la revendication 8, comprenant un conduit reliant une sortie des fumées de la chaudière à une entrée de comburant (25) du four (2).

10. Incinérateur (1) selon l'une des revendications 1 à 9, comprenant au moins un échangeur thermique (304) configuré pour transférer de l'énergie thermique depuis une fumée en sortie du four (2) vers le premier circuit fluidique (7), préférentiellement vers une partie du circuit fluidique différente du premier circuit de vapeur (23).

11. Incinérateur (1) selon l'une des revendications 1 à 10, comprenant un conduit d'acheminement de l'air (305) relié à l'entrée de comburant (25) du four (2), et comprenant au moins un réchauffeur (301) configuré pour transférer l'énergie thermique du premier circuit fluidique (7) vers de l'air compris dans le conduit d'acheminement de l'air (305).

12. Incinérateur (1) selon l'une des revendications 1 à 11, comprenant une conduite propre à transporter les fumées issues de la chaudière (5), et au moins un réchauffeur configuré pour transférer de l'énergie thermique depuis la conduite propre à transporter les fumées issues de la chaudière vers une partie du premier circuit fluidique (7).

13. Incinérateur (1) selon l'une des revendications 1 à 12, comprenant un réchauffeur (206) configuré pour permettre de transférer de l'énergie thermique depuis un conduit relié à la sortie en dihydrogène (17) de l'électrolyseur 13 vers le premier circuit fluidique (7).

14. Procédé de production de dihydrogène, dans lequel on incinère des combustibles (3) dans le four (2) d'un incinérateur conforme à l'une des revendications 1 à 13, l'électrolyseur produisant du dihydrogène.

15. Procédé selon la revendication précédente, dans lequel entre 80 % et 95% inclus, préférentiellement entre 85% et 90 % inclus de l'énergie électrique produite par l'alternateur (10) est consommée par l'électrolyseur (13).

## Patentansprüche

1. Verbrennungsanlage (1), die Folgendes umfasst:
- einen Ofen (2), der dazu konfiguriert ist, Brennstoffe (3) zu verbrennen, wobei der Ofen (2) einen Auslass (4) für Rauchgase, die durch die Verbrennung der Brennstoffe (3) entstehen,
- einen Kessel (5), der einen Rauchgaseinlass umfasst, der mit dem Rauchgasauslass des Ofens (2) verbunden ist, und einem Rauchgasauslass umfasst,
- einen ersten Fluidkreislauf (7), der eine Schleife bildet, wobei der erste Fluidkreislauf (7) den Kessel (5) durchläuft,
- einen Turbogenerator (8), der eine Turbine (9) und einen Wechselstromgenerator (10) umfasst, wobei die Turbine (9) im ersten Fluidkreislauf (7) angeordnet ist und mindestens einen Wasserdampfauslass umfasst,
- ein Kondensationsmodul (203) für den Wasserdampf, das strömungstechnisch mit mindestens einem Wasserdampfauslass (22) der Turbine (9) verbunden ist, wobei sich ein Teil des ersten Fluidkreislaufs (7) zwischen dem Kessel (5) und dem Kondensationsmodul (203) befindet, und die Turbine (9) umfasst, die einen ersten Dampfkreislauf (23) bildet,
- einen Wasserelektrolyseur (13), wobei der Elektrolyseur (13) für die Erzeugung von Diwasserstoff konfiguriert ist, wobei der Elektrolyseur (13) elektrisch mit dem Wechselstromgenerator (10) verbunden ist und einen Wasserdampfeinlass (16) und einen Diwasserstoffauslass (17) umfasst,
- einen zweiten Fluidkreislauf (18), wobei der zweite Fluidkreislauf (18) mit dem ersten Dampfkreislauf (23) und dem Wasserdampfeinlass (16) des Elektrolyseurs (13) verbunden ist, und
- einen Dampf- und Diwasserstoffabscheider (205), wobei der Diwasserstoffauslass (17) mit dem Abscheider (205) verbunden ist, wobei der Abscheider einen Wasserauslass umfasst, der mit dem ersten Fluidkreislauf (7) verbunden ist.

2. Verbrennungsanlage (1) nach Anspruch 1, wobei der Elektrolyseur (13) ein Festoxid-Elektrolyseur (13) vom SOEC-Typ zur Erzeugung von Diwasserstoff ist, wobei der Elektrolyseur (13) dazu konfiguriert ist, Diwasserstoff zu erzeugen, wenn der Druck des Wasserdampfs am Wasserdampfeinlass zwischen 1,1 bar und 15 bar, vorzugsweise zwischen 1,1 bar und 10 bar beträgt.

3. Verbrennungsanlage (1) nach Anspruch 1 oder 2, die einen Wärmetauscher (204) umfasst, der dazu konfiguriert ist, ein im zweiten Fluidkreislauf (18) transportiertes Fluid zu erwärmen.

4. Verbrennungsanlage (1) nach einem der Ansprüche 1 bis 3, wobei:
- der zweite Fluidkreislauf (18) mit einem Teil des ersten Dampfkreislaufs (23), der sich einschließlich zwischen mindestens einem Wasserdampfauslass der Turbine (22) und dem Kondensationsmodul (203) des Wasserdampfs befindet, und vorzugsweise mit mindestens einem Wasserdampfauslass der Turbine (22) verbunden ist, wobei die Verbrennungsanlage (1) mindestens einen Wärmetauscher (204) umfasst, der dazu konfiguriert ist, die Wärmeenergie von einem Fluidkreislauf, der mit dem Diwasserstoffauslass (17) verbunden ist, auf den zweiten Fluidkreislauf (18) zu übertragen.

5. Verbrennungsanlage (1) nach einem der Ansprüche 1 bis 4, wobei der Elektrolyseur einen Disauerstoffauslass (24) umfasst,
wobei der zweite Fluidkreislauf (18) mit einem Teil des ersten Dampfkreislaufs (23), der sich einschließlich zwischen mindestens einem Wasserdampfauslass der Turbine (22) und dem Kondensationsmodul (203) des Wasserdampfs befindet, und vorzugsweise mit mindestens einem Wasserdampfauslass der Turbine (22) verbunden ist, wobei die Verbrennungsanlage (1) mindestens einen Wärmetauscher (204) umfasst, der dazu konfiguriert ist, die Wärmeenergie von einem Fluidkreislauf, der mit dem Disauerstoffauslass (24) verbunden ist, auf den zweiten Fluidkreislauf (18) zu übertragen.

6. Verbrennungsanlage (1) nach einem der Ansprüche 1 bis 5, wobei der Kessel (5) einen Wasserdampfauslass (20) umfasst, und wobei der zweite Fluidkreislauf (18) mit einem Teil des ersten Dampfkreislaufs (23) verbunden ist, der sich einschließlich zwischen dem Wasserdampfauslass des Kessels (20) und einem Wasserdampfeinlass der Turbine (9) befindet.

7. Verbrennungsanlage (1) nach einem der Ansprüche 1 bis 6, die eine Steuereinrichtung für den Durchflusses im ersten Fluidkreislauf (7) umfasst, die dazu konfiguriert ist, einen Massenfluss D*ₘ₁* am Wasserdampfauslass des Kessels zu steuern, und außerdem eine Steuereinrichtung für den Durchfluss im zweiten Fluidkreislauf (18) umfasst, die dazu konfiguriert ist, einen Massenfluss D*ₘ₂* zu steuern, wobei das Verhältnis zwischen dem zweiten Massenfluss D*ₘ₂* und dem ersten Massenfluss D*ₘ₁* vorzugsweise zwischen 0,1 % und 15 %, insbesondere zwischen 0,5 % und 10 % und noch bevorzugter zwischen 3 % und 10 % beträgt.

8. Verbrennungsanlage (1) nach einem der Ansprüche 1 bis 7, wobei der Elektrolyseur einen Disauerstoffauslass (24) umfasst, der mit dem Ofen (2) verbunden ist.

9. Verbrennungsanlage (1) nach Anspruch 8, die einen Kanal umfasst, der einen Rauchgasauslass des Kessels mit einem Oxidationsmitteleinlass (25) des Ofens (2) verbindet.

10. Verbrennungsanlage (1) nach einem der Ansprüche 1 bis 9, der mindestens einen Wärmetauscher (304) umfasst, der dazu konfiguriert ist, die Wärmeenergie vom Rauchgasauslass des Ofens (2) auf den ersten Fluidkreislauf (7), vorzugsweise auf einen Teil des Fluidkreislaufs, der sich vom ersten Dampfkreislauf (23) unterscheidet, zu übertragen.

11. Verbrennungsanlage (1) nach einem der Ansprüche 1 bis 10, die einen Luftleitkanal (305) umfasst, der mit dem Oxidationsmitteleinlass (25) des Ofens (2) verbunden ist, und mindestens eine Heizeinrichtung (301) umfasst, die dazu konfiguriert ist, die Wärmeenergie vom ersten Fluidkreislauf (7) auf die im Luftleitkanal (305) enthaltene Luft übertragen.

12. Verbrennungsanlage (1) nach einem der Ansprüche 1 bis 11, die einen Kanal, der sich zum Befördern der vom Kessel (5) stammenden Rauchgase eignet, und mindestens eine Heizeinrichtung umfasst, die dazu konfiguriert ist, die Wärmeenergie von dem Kanal, der sich zum Befördern der vom Kessel stammenden Rauchgase eignet, auf einen Teil des ersten Fluidkreislaufs (7) zu übertragen.

13. Verbrennungsanlage (1) nach einem der Ansprüche 1 bis 12, die eine Heizeinrichtung (206) umfasst, die dazu konfiguriert ist, das Übertragen der Wärmeenergie von einem Kanal, der mit dem Diwasserstoffauslass (17) des Elektrolyseurs (13) verbunden ist, auf den ersten Fluidkreislauf (7) zu ermöglichen.

14. Verfahren zum Erzeugen von Diwasserstoff, wobei Brennstoffe (3) im Ofen (2) einer Verbrennungsanlage nach einem der Ansprüche 1 bis 13 verbrannt werden, wobei der Elektrolyseur Diwasserstoff erzeugt.

15. Verfahren nach dem vorhergehenden Anspruch, wobei zwischen 80 % und einschließlich 95 %, vorzugsweise zwischen 85 % und einschließlich 90 %, der vom Wechselstromgenerator (10) erzeugten elektrischen Energie vom Elektrolyseur (13) verbraucht wird.

## Claims

1. Incinerator (1), comprising:
- a furnace (2) configured to incinerate fuels (3), the furnace (2) comprising an outlet for fumes (4) produced by the incineration of the fuels (3),
- a boiler (5) comprising a fume inlet connected to the fuel outlet of the furnace (2), and comprising a fume outlet,
- a first fluid circuit (7) forming a loop, the first fluid circuit (7) passing through the boiler (5),
- a turboalternator (8), comprising a turbine (9) and an alternator (10), the turbine (9) being arranged in the first fluid circuit (7) and comprising at least one steam outlet,
- a module (203) for condensation of the steam, fluidically connected to at least one steam outlet (22) of the turbine (9), a part of the first fluid circuit (7) lying between the boiler (5) and the condensation module (203) and comprising the turbine (9) forming a first steam circuit (23),
- a water electrolyser (13), the electrolyser (13) being configured for producing dihydrogen, the electrolyser (13) being electrically connected to the alternator (10), and comprising a steam inlet (16) and a dihydrogen outlet (17),
- a second fluid circuit (18), the second fluid circuit (18) being connected to the first steam circuit (23) and to the steam inlet (16) of the electrolyser (13), and a steam and dihydrogen separator (205), in which the dihydrogen outlet (17) is connected to the separator (205), the separator comprising a water outlet connected to the first fluid circuit (7).

2. Incinerator (1) according to claim 1, wherein the electrolyser (13) is a solid-oxide electrolyser (13) of the SOEC type for producing dihydrogen, the electrolyser (13) being configured to produce dihydrogen when the pressure of the steam at the steam inlet is between 1.1 bar and 15 bar, preferentially between 1.1 bar and 10 bar.

3. Incinerator (1) according to claim 1 or 2, comprising a heat exchanger (204) configured to heat a fluid transported in the second fluid circuit (18).

4. Incinerator (1) according to one of claims 1 to 3, wherein:
- the second fluid circuit (18) being connected to a part of the first steam circuit (23) lying between at least one steam outlet of the turbine (22) and the steamcondensation module (203) inclusive, and preferentially to at least one steam outlet of the turbine (22), the incinerator (1) comprising at least one heat exchanger (204) configured to transfer thermal energy from a fluid circuit connected to the dihydrogen outlet (17) to the second fluid circuit (18).

5. Incinerator (1) according to one of claims 1 to 4, wherein the electrolyser comprises a dioxygen outlet (24),
the second fluid circuit (18) being connected to a part of the first steam circuit (23) lying between at least one steam outlet of the turbine (22) and the steam condensation module (203) inclusive, and preferentially to at least one steam outlet of the turbine (22),
the incinerator (1) comprising at least one heat exchanger (204) configured to transfer thermal energy from a fluid circuit connected to the dihydrogen outlet (24) to the second fluid circuit (18).

6. Incinerator (1) according to one of claims 1 to 5, wherein the boiler (5) comprises a steam outlet (20), and wherein the second fluid circuit (18) is connected to a part of the first steam circuit (23) lying between the steam outlet of the boiler (20) and a steam inlet of the turbine (9) inclusive.

7. Incinerator (1) according to one of claims 1 to 6, comprising means for controlling the flow in the first fluid circuit (7) configured to control a mass flow *Dₘ₁* at the steam outlet of the boiler, and also comprising means for controlling the flow in the second fluid circuit (18) configured to control a mass flow the ratio between the second mass flow *Dₘ₂* and the first mass flow *Dₘ₁* preferentially being between 0.1% and 15%, in particular between 0.5% and 10%, more preferentially between 3% and 10%.

8. Incinerator (1) according to one of claims 1 to 7, wherein the electrolyser comprises a dioxygen outlet (24) connected to the furnace (2).

9. Incinerator (1) according to claim 8, comprising a pipe connecting a fume outlet of the boiler to an oxidant inlet (25) of the furnace (2).

10. Incinerator (1) according to one of claims 1 to 9, comprising at least one heat exchanger (304) configured to transfer thermal energy from fume discharged from the furnace (2) to the first fluid circuit (7), preferentially to a part of the fluid circuit different from the first steam circuit (23).

11. Incinerator (1) according to one of claims 1 to 10, comprising an air-conveying pipe (305) connected to the oxidant inlet (25) of the furnace (2), and comprising at least one heater (301) configured to transfer the thermal energy from the first fluid circuit (7) to the air lying in the air-conveying pipe (305).

12. Incinerator (1) according to one of claims 1 to 11, comprising a conduit suitable for transporting the fumes coming from the boiler (5), and at least one heater configured to transfer thermal energy from the conduit suitable for transporting the fumes coming from the boiler to a part of the first fluid circuit (7).

13. Incinerator (1) according to one of claims 1 to 12, comprising a heater (206) configured to make it possible to transfer thermal energy from a pipe connected to the dihydrogen outlet (17) of the electrolyser (13) to the first fluid circuit (7).

14. Dihydrogen production method, wherein fuels (3) are incinerated in the furnace (2) of an incinerator according to one of claims 1 to 13, the electrolyser producing dihydrogen.

15. Method according to the preceding claim, wherein between 80% and 90% inclusive, preferentially between 85% and 90% inclusive, of the electrical energy produced by the alternator (10) is consumed by the electrolyser (13).
